# EUROPÄISCHE PATENTANMELDUNG

(11) **EP 4 838 697 A1**
(43) Veröffentlichungstag der Anmeldung: **11.11.2026**
(21) Anmeldenummer: 26173962.7
(22) Anmeldetag: 22.04.2026
(51) Int. Cl.: H01Q 1/46, H04B 3/54

(54) **VORRICHTUNG ZUR STEUERUNG EINES ELEKTRISCHEN GERÄTES ÜBER HOCHFREQUENZSIGNALE**

(30) Priorität: 07.05.2025 DE 102025117414
(71) Anmelder: Becker-Antriebe GmbH, 35764 Sinn (DE)
(72) Erfinder: Ebener, Gerhold, 57299 Burbach (DE); Naumann, Bernd, 35075 Gladenbach (DE); Behr, Thomas, 35756 Mittenaar (DE)
(74) Vertreter: Weckenbrock, Matthias

(57) **Zusammenfassung**

Die Erfindung betrifft eine Vorrichtung (10) zur Steuerung eines elektrischen Gerätes (1) über Hochfrequenzsignale, umfassend
- eine Hochfrequenzeinheit (3) zum Senden und/oder zum Empfangen von Hochfrequenzsignalen mit einer oder mehreren Frequenzen zur Steuerung des elektrischen Gerätes (1),
- wenigstens einen ersten elektrischen Leiter (5) und einen zweiten elektrischen Leiter (6) für die Versorgung der Vorrichtung (10), und/oder des elektrischen Gerätes (1) und/oder der Hochfrequenzeinheit (3) mit elektrischer Energie, wobei wenigstens einer der Leiter (5, 6) als Antenne zum Senden und/oder Empfangen der Hochfrequenzsignale ausgebildet ist,
- eine mit der Hochfrequenzeinheit (3) verbundene Koppeleinrichtung (7). Erfindungsgemäß ist die Koppeleinrichtung (7) als Koaxialleitung ausgebildet und weist einen Außenmantel oder Schirm (8) auf, der den ersten (5) oder zweiten elektrischen Leiter (6) koaxial umgibt, wobei der Außenmantel oder Schirm (8) mit der Hochfrequenzeinheit (3) elektrisch leitend verbunden ist.

## Beschreibung

Die Erfindung betrifft eine Vorrichtung zur Steuerung eines elektrischen Gerätes über Hochfrequenzsignale nach dem Oberbegriff des Anspruchs 1.

Elektrische Geräte bzw. Elektrogeräte können eine Funksteuerung zum Empfangen von Steuerdaten oder Aussendung von Rückmeldungen aufweisen. Ein solches elektrisches Gerät könnte beispielsweise ein Haushalts-, Multimedia- oder dergleichen Gerät sein, welches mittels einer Funksteuerung angesteuert werden kann. Insbesondere kann es sich um einen Motor, z.B. Rohrmotor einer Verdunkelungs-/ Beschattungsvorrichtung handeln, welcher mittels integriertem Funkmodul über das Sender und Empfänger Prinzip angesteuert werden kann. Ein solcher Funksender/ Empfänger weist einen Antennen-Anschluss auf, der im inneren eines Gehäuses des elektrischen Gerätes angeordnet sein kann.

Grundsätzlich bekannt sind auch nach außen verlegte Antennen, d.h. Antennen, die sich außerhalb eines Antriebsgehäuses des elektrischen Gerätes befinden. Diese Lösung ist häufig gegenüber innen liegenden Antennen kostenintensiver.

Ferner sind nach außen verlegte Antennen anfällig für Beschädigungen oder unsachgemäße Veränderungen, wie (versehentliches) Kürzen oder Verlängern der Antenne mit nachteiligen Effekten für die reibungslose Funktionsweise.

Darüber hinaus muss eine nach außen verlegte Antenne aufwendig isoliert werden, da sie netzteilbedingt meist unter Netzspannung steht.

Ferner sind häufig zusätzliche Maßnahmen notwendig, wie etwa ein separater Knickschutz, eine Zugentlastung oder eine Potentialtrennung durch das Netzteil. Eine nach außen verlegte Antenne ist bei direkter Kontaktierung mit dem Spannungspotential zum Funk hin auch den Netzstörgrößen ausgesetzt.

Eine andere Möglichkeit für eine Antenne bei einem elektrischen Gerät ist die Verwendung einer Netzleitung, beispielsweise eines elektrischen Leiters. Denn da die Netzzuleitung von innen nach außen geführt, mechanisch stabil und fest verlegt ist, kann diese Eigenschaft auch als Antenne angewendet werden.

Die Verwendung einer Netzleitung als Antenne, wie beispielsweise in der EP 2 345 789 A1 oder der EP 1 397 576 A1 beschrieben, ist gegenüber einer nach außen verlegten Antenne vorteilhaft, da die Antenne bereits mechanisch eine feste Position, d.h. eine Ausführung mit wenig mechanischer Toleranz hat. Darüber hinaus hat sie je nach Leiterausführung (Querschnitt) bereits eine niedrige Impedanz. Nachteilig ist die Effizienz einer solchen Vorrichtung.

Aus der EP 3 221 970 A1 und der WO 2022 069 494 A1 ist eine Vorrichtung zur Steuerung eines elektrischen Haushaltsgeräts über Hochfrequenzsignale bekannt, die über ein Stromversorgungsnetz mit elektrischer Energie versorgt wird, wobei die Vorrichtung einen ersten elektrischen Leiter und einen zweiten elektrischen Leiter zur Versorgung der Steuervorrichtung mit elektrischer Energie aufweist. Ferner sind ein Koppler und eine Hochfrequenzeinheit zum Senden und/oder Empfangen von Hochfrequenzsignalen vorgesehen, die einen Ausgang und/oder einen Eingang von Hochfrequenzsignalen enthält, der elektrisch mit einem Verbindungspunkt des Kopplers verbunden ist, so dass der Koppler die Ausgangs- und/oder Eingangsimpedanz der Hochfrequenzeinheit anpasst.

Nachteilig bei solchen Netz-Leitungs-Antennen aus dem Stand der Technik sind vor allem die einzuhaltenden Abstände und Isolationen und Schutzvorschriften, die mit spannungsfesten Bauteilen herzustellenden galvanischen Kopplungen, die stark verlustbehaftet sind und für Hochfrequenz-technische Übertragungen eher ungeeignet sind. Auch die aufwendige Bauweise bei Verwendung eines solchen galvanischen Kopplers wirkt sich nachteilig aus.

Weiterhin besteht bei diesem Stand der Technik keine galvanische Trennung zwischen Netzleitung und Hochfrequenzeingang. Daher können die Netzspannung und störbehaftete Netz - Umgebung (Überspannungen, Störimpulse usw.) bei einer galvanischen Kontaktierung auf den empfindlichen Antennen-Eingang wirken.

Weiterhin stellt die Kopplung zur Netzleitung ebenfalls ein Problem wegen der notwendigen Potentialtrennung dar.

Ausgehend von den zuvor beschriebenen Nachteilen liegt der Erfindung die Aufgabe zugrunde, die oben genannten Nachteile zu vermeiden und eine einfache und kostengünstige Vorrichtung zur Steuerung eines elektrischen Geräts mit Hilfe von Hochfrequenzsignalen vorzuschlagen.

Diese Aufgabe wird gelöst mit einer Vorrichtung zur Steuerung eines elektrischen Gerätes über Hochfrequenzsignale nach Anspruch 1.

Die Erfindung betrifft eine Vorrichtung zur Steuerung eines elektrischen Gerätes über Hochfrequenzsignale, umfassend eine Hochfrequenzeinheit zum Senden und/oder zum Empfangen von Hochfrequenzsignalen mit einer oder mehreren Frequenzen zur Steuerung des elektrischen Gerätes, wenigstens einen ersten elektrischen Leiter und einen zweiten elektrischen Leiter für die Versorgung der Vorrichtung, und/oder des elektrischen Gerätes und/oder der Hochfrequenzeinheit mit elektrischer Energie, wobei wenigstens einer der Leiter als Antenne zum Senden und/oder Empfangen der Hochfrequenzsignale ausgebildet ist.

Ferner weist die Vorrichtung eine mit der Hochfrequenzeinheit verbundene Koppeleinrichtung auf.

Erfindungsgemäß ist die Koppeleinrichtung als Koaxialleitung ausgebildet und weist einen Außenmantel oder Schirm auf, der den ersten oder zweiten elektrischen Leiter koaxial umgibt, wobei der Außenmantel oder Schirm mit der Hochfrequenzeinheit elektrisch leitend verbunden ist.

Der erste und zweite elektrische Leiter der Vorrichtung sind mit dem Stromversorgungsnetz verbunden, wobei der erste und zweite Leiter mit einem elektrischen Netzteil zur Versorgung der Hochfrequenzeinheit mit elektrischer Energie verbunden sind.

Das elektrische Gerät kann beispielsweise ein Rohrantrieb sein, mit einem Getriebe, Gehäuse (Rohr) und Motor, bestehend aus Rotor und Stator, sowie mit einer Motorsteuerung. Es sind aber auch allgemein andere elektrische Geräte denkbar, wie beispielsweise eine Beleuchtung an einer Markise oder dergleichen, die mit einer solchen Vorrichtung gesteuert werden können.

Wenn man die Eigenschaft der Netzleitungs-Isolierung (z.B. PVC, Gummi oder dergleichen) ausnutzt, zum einen wegen der Potentialtrennung und zum anderen wegen den Hochfrequenz-seitigen Übertragungseigenschaften, kann man die Kopplung mit Hilfe einer Schirmleitung herstellen, indem man anstelle der Seele nun den Schirm kontaktiert.

Diese Schirmleitung kann ausgeführt sein mit einer Schirmlänge einer Viertelwellenlänge oder drei Viertelwellenlänge, insbesondere bestimmt aus den Eigenschaften der Netzleitungsisolierung und/oder der Nutzfrequenz.

Die erfindungsgemäße Ausgestaltung der Koppeleinrichtung als Koaxialleitung ist gegenüber dem genannten Stand der Technik vorteilhaft. Denn sie weist eine verbesserte Kopplungseffizienz auf.

Denn zum einen werden durch die Rohrstruktur das elektromagnetische Feld der Zuleitung besser eingefangen und geleitet. Das steigert die Effizienz der Kopplung, da ein größerer Teil des Signals zur HF-Einheit übertragen wird.

Zum anderen ist eine konstante Kopplung realisiert. Denn die Umhüllung sorgt dafür, dass die Kopplung gleichmäßiger ist, da das Feld entlang der gesamten Länge der als Koaxialleitung ausgebildeten Koppeleinrichtung eingefangen wird.

Ferner werden Störungen reduziert. Denn die als Koaxialleitung ausgebildete Koppeleinrichtung erhöht die Kopplung und verringert den Einfluss äußerer elektromagnetischer Störungen, da das Rohr das elektromagnetische Signal stärker zur Zuleitung konzentriert.

Die Koppeleinrichtung kann die Ausbreitung von Hochfrequenzsignalen optimieren, da es wie eine Art Wellenleiter wirkt. Dadurch kann das Signal in einem breiteren Frequenzspektrum effizienter gekoppelt werden.

Eine Antenne soll insbesondere nahe dem Antennenanschluss niederohmig ausgebildet sein, um parasitäre und bauartbedingte Ohm'sche Verluste zu minimieren. Da die Koppeleinrichtung selbst Bestandteil der Antenne wird, wirkt sich dieser Teil der Antenneneigenschaft positiv auf die gesamte Signalübertragungskette aus.

Gemäß einer ersten vorteilhaften Ausgestaltung der Erfindung kann wenigstens einer der elektrischen Leiter Teil einer Mantelleitung sein, wobei dieser wenigstens eine elektrische Leiter von einem elektrisch isolierenden Isolationsmantel umgeben ist und die Koppeleinrichtung den isolierten elektrischen Leiter koaxial umgibt. Mit anderen Worten weist die elektrische Leitung den elektrischen Leiter bzw. eine Litze mit einem ihn umgebenden Isolationsmantel auf. Dieser Isolationsmantel der elektrischen Leitung dient vorliegend als Dielektrikum. Sein Material und seine Länge bestimmen die dielektrische Leitfähigkeit (das εr (Epsilon-r) und somit die Wellenlänge der Hochfrequenzsignale.

Nach einer weiteren vorteilhaften Ausgestaltung der Erfindung isoliert der Isolationsmantel den ersten oder zweiten elektrischen Leiter elektrisch gegenüber der Koppeleinrichtung.

Besonders vorteilhaft ist, dass der Außenmantel oder Schirm der Koppeleinrichtung eine Länge etwa von einem Viertel oder von drei Viertel der Wellenlänge der durch die Hochfrequenzeinheit empfangenen oder ausgestrahlten Hochfrequenzsignale aufweist.

Mit der Kopplung über eine Viertelwellenlänge oder einer drei Viertelwellenlänge des Schirms wird der (quasi)Anschlusspunkt einer dort entstandenen Impedanz der Netzleitung kontaktlos herübertransformiert oder "abgegriffen", wobei allein die Permittivität ε, auch dielektrische Leitfähigkeit, Dielektrizität oder dielektrische Funktion genannt, insbesondere die stoffabhängige Permittivitätszahl εᵣ (Epsilon-r) der Isolationsschicht die (Viertelwellen-)Länge des Röhrchen's bestimmt.

Ferner hat die elektrische Impedanz Z der hier entstandenen Koaxialstruktur keinen Einfluss auf die Größe der zu transferierenden Impedanz bei Nutzfrequenz, diese darf also beispielsweise zwischen 40 bis 60 Ohm sein, lediglich die Bandbreite variiert hierdurch.

Die geringen ohm'schen Verluste des zwangsweise großen AußenDurchmessers des Metallröhrchens wirken sich positiv auf die Kopplung und damit auf das Sende- und Empfangs-Funksignal aus.

Die Koppeleinrichtung kann mehrere Außenmantel oder Schirme aufweisen, wobei jeder der Außenmantel oder Schirme mit einem separaten Hochfrequenz-Eingang der Hochfrequenzeinheit elektrisch verbunden ist oder wobei mehrere Außenmantel oder Schirme mit einem einzigen Hochfrequenz-Eingang elektrisch verbunden sind.

Besonders vorteilhaft ist eine Ausführungsform, bei der der Außenmantel oder Schirm der Koppeleinrichtung als wenigstens ein Röhrchen oder eine Hülse ausgebildet ist. Denkbar ist auch ein als Röhrchen oder als Hülse ausgebildetes Schirmgeflecht.

Das wenigstens eine Röhrchen oder die Hülse kann als Metallröhrchen, insbesondere aus nicht-ferromagnetischem Material, vorzugsweise im Wesentlichen aus Messing und/oder Kupfer und/oder Aluminium, ausgebildet sein.

Das wenigstens eine Röhrchen oder die Hülse kann aber alternativ aus einer Folie ausgebildet sein. Die Folie kann als Printfolie ausgebildet sein, welche entsprechend der gewünschten Anforderungen metallisiert ist.

Anstelle des (metallischen) Röhrchens oder der Hülse kann demnach auch eine flexible Leiterplatte um den oder die Leiter gewickelt werden.

Hierdurch ist eine einfach zu montierende Durchführung der Netzleitungslitze vor dem endgültigen Netz- Anschluss oder als Vor-Konfektionierung der Leitung möglich.

Die Folie zur Bildung der Schirmfläche des Außenmantels als Röhrchen oder als Hülse kann in vorteilhafter Weise um die wenigstens erste oder zweite elektrische Leitung oder um mehrere elektrische Leitungen herumgelegt werden.

Das Röhrchen, die Hülse oder die als Hülse gerollte Folie müssen elektrisch leitend an den oder die Hochfrequenz-Eingang bzw. -eingänge angeschlossen werden.

Wesentlich bei den Röhrchen ist daher, dass sie wenigstens einen elektrischen Anschluss zur elektrischen Kontaktierung der Folie an die Hochfrequenzeinheit aufweisen. Denkbar ist, dass je ein Anschluss pro Frequenz vorgesehen ist, also unterschiedliche Frequenzen angesprochenen werden können.

Diese elektrische Verbindung zwischen dem Außenmantel oder Schirm und dem Hochfrequenz-Eingang kann ebenfalls als Folienverbindung, insbesondere als flexible Leiterplatte, ausgeführt sein. Hierdurch ist eine flexible Anbindung des Röhrchens an den oder die Hochfrequenz-Eingänge möglich.

Insbesondere kann die Verbindung (Folienverbindung) zwischen dem Schirm und dem Hochfrequenz-Eingang als flexible PCB-Folie oder FPC-Verbinder (flexible Leiterplatte) ausgeführt sein. Auf dieser Folie kann auf einfache Weise die Antennenanpassung, insbesondere eine Impedanz-Anpassung, vorgesehen sein. Denn die Impedanz der Antenne muss auf das Funkmodul angepasst werden.

Denkbar ist auch, dass sowohl das gerollte Röhrchen als auch die elektrische Verbindung zwischen Außenmantel oder Schirm und Hochfrequenz-Eingang als flexible Leiterplatte ausgebildet ist.

Da die flexible Leiterplatte auch elektronische Bauteile wie eine normale Leiterplatte tragen kann, kann die entsprechende Antennen-Anpassung direkt auf der flexiblen Leiterplatte hergestellt werden. Die Anpassung kann auch durch andere Maßnahmen am Layout innerhalb der flexiblen Leiterplatte hergestellt werden, beispielsweise durch die Wahl der Länge der Leiterbahnen.

Die flexible Leiterplatte (sowohl für das gerollte Röhrchen selbst als auch für die Verbindung zwischen Außenmantel oder Schirm und Hochfrequenz-Eingang) kann auf beiden Seiten unterschiedlich große Kupfer-Flächen bzw. verschiedene Metallisierungen aufweisen. Diese beiden Seiten der Folie bzw. Leiterplatte werden dann zur Übertragung unterschiedlicher Frequenzen an unterschiedliche Hochfrequenz-Eingänge angeschlossen. Dadurch ist es möglich mit einer solchen doppelseitigen Folie zwei Röhrchen zu ersetzen.

Gemäß einer weiteren vorteilhaften Variante der Erfindung kann die Innenfläche und die Außenfläche der rohr- oder hülsenförmig geformten Folie zur Bildung der Schirmfläche des Außenmantels jeweils unterschiedlich metallisiert sein und jede der Flächen kann mit einem Hochfrequenz-Eingang elektrisch verbunden sein.

Mit anderen Worten kann die Folie auf beiden Seiten unterschiedlich metallisiert sein. Jede Metallisierung ist mit einem eigenen Hochfrequenz-Eingang elektrisch verbunden. Die Folie umschließt einen Leiter rohrförmig. Dadurch sind mit einer Folie zwei Frequenzen umsetzbar. Ferner ist es möglich, mit einer solchen doppelseitigen Folie zwei Röhrchen zu ersetzen, wie oben erwähnt.

Die Verbindung zwischen Hochfrequenz-Anschluss und Röhrchen kann demnach beispielsweise ausgeführt sein als Koaxialleitung, Print-Folie, Direktanschluss, mit einem Kontaktschuh oder als Clip.

Die Anpassung zwischen der übertragenen Netz-Impedanz und dem Antennenanschluss kann entweder mit Bauteilen vor dem Antennenanschluss realisiert oder in die Verbindungsleitung (Print-Folie) gesetzt werden.

Gemäß einer weiteren vorteilhaften Ausgestaltung der Erfindung kann die Vorrichtung einen elektrischen Sperrkreis zur Ableitung unerwünschter Hochfrequenzsignale, insbesondere zur Sperrung elektronischer Komponenten der Antriebsvorrichtung gegen unerwünschte Funksignale der Hochfrequenzeinheit aufweisen. Dieser Sperrkreis kann zwischen Schirm und Netzteil vorgesehen sein. Es kann also in den Anschluss der Netzleitung an die entsprechende Elektronik ein Sperrkreis bzw. Sperrfilter eingefügt werden, damit das Funksignal beispielsweise vom Netzteil nicht gestört wird.

Für eine besonders vorteilhafte Ausgestaltung und eine kompakte und sichere Anordnung können zumindest die Hochfrequenzeinheit und die Koppeleinrichtung in einem gemeinsamen Gehäuse angeordnet sein.

Das elektrische Gerät kann die oben beschriebene Vorrichtung zur Steuerung des elektrischen Gerätes, insbesondere eines Rohrmotors einer Verdunkelungs-/Beschattungsvorrichtung, über Hochfrequenzsignale aufweisen.

Das elektrische Gerät und die Antriebsvorrichtung können in einem gemeinsamen Gehäuse angeordnet sein, wodurch eine besonders kompakte Ausführungsform der Vorrichtung realisiert ist.

Die Vorrichtung kann als Vorschaltgerät für das elektrische Gerät ausgebildet sein oder in der Netzleitung im Netzstecker eingebaut sein.

Insbesondere kann eine Verdunkelungs-/Beschattungsvorrichtung mit einem auf ein Wickelrohr auf- und abwickelbaren Behang vorgesehen sein, wobei das Wickelrohr von einem oben beschriebenen elektrischen Gerät angetrieben wird.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Dabei zeigen zum Teil schematisch:
- Figur 1: eine Darstellung einer Vorrichtung zur Steuerung eines elektrischen Gerätes über Hochfrequenzsignale mit einer Koppeleinrichtung,
- Figur 2a: die Vorrichtung gemäß Figur 1 als Vorschaltgerät für das elektrische Gerät,
- Figur 2b: die Vorrichtung gemäß Figur 1 und das elektrische Gerät angeordnet in einem gemeinsamen Gehäuse und
- Figur 3: einen Außenmantel oder Schirm der Koppeleinrichtung in einem nicht aufgerollten Zustand.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

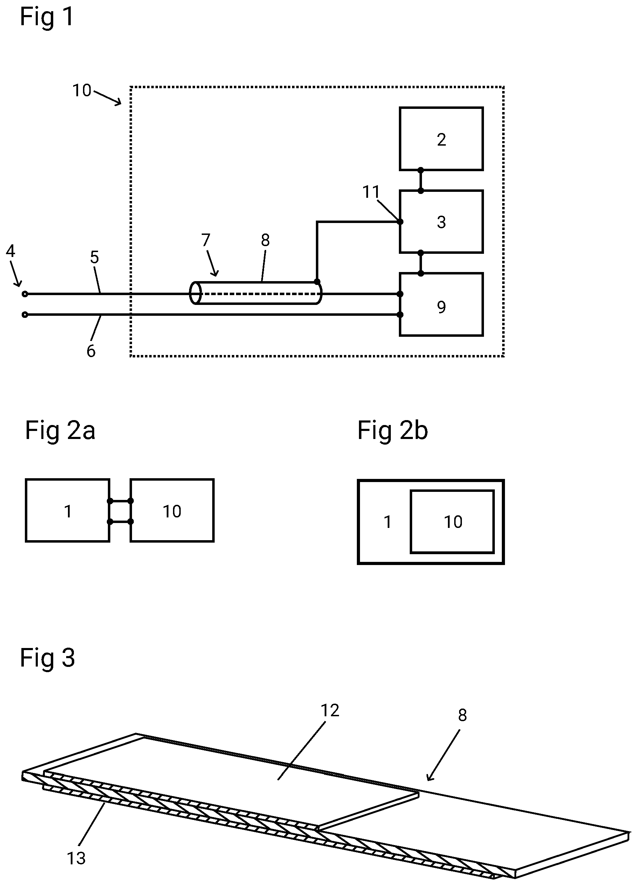

Figur 1 zeigt in einer schematischen Darstellung eine Vorrichtung 10 zur Steuerung eines elektrischen Gerätes 1 über Hochfrequenzsignale.

Diese Vorrichtung 10 weist vorliegend eine Hochfrequenzeinheit 3 zum Senden und/oder zum Empfangen von Hochfrequenzsignalen mit einer oder mehreren Frequenzen zur Steuerung des elektrischen Gerätes 1 auf.

Wenigstens ein erster elektrischer Leiter 5 und ein zweiter elektrischer Leiter 6 einer Stromversorgung 4 bzw. eines Stromnetzes sind für die Versorgung der Vorrichtung 10, und/oder des elektrischen Gerätes 1 und/oder der Hochfrequenzeinheit 3 mit elektrischer Energie vorgesehen. Diese Leiter 5, 6 können mit einem elektrischen Netzteil 9 der Vorrichtung 10 elektrisch verbunden sein (vgl. Figur 1).

Im vorliegenden Ausführungsbeispiel ist einer der Leiter 5 als Antenne zum Senden und/oder Empfangen der Hochfrequenzsignale ausgebildet. Denkbar ist aber auch, dass der andere Leiter 6 oder sogar beide Leiter 5, 6 als Antenne ausgebildet sind.

Aus Figur 1 geht ebenfalls noch eine mit der Hochfrequenzeinheit 3 verbundene Koppeleinrichtung 7 hervor, welche vorliegend als Koaxialleitung ausgebildet ist und einen Außenmantel oder Schirm 8 aufweist, der vorliegend den ersten elektrischen Leiter 5 koaxial umgibt, wobei der Außenmantel oder Schirm 8 mit der Hochfrequenzeinheit 3 elektrisch leitend verbunden ist. Wie erwähnt, könnte der Außenmantel oder Schirm 8 auch einen zweiten elektrischen Leiter 6 oder sogar mehrere Leiter 5, 6 umgeben.

Die Koppeleinrichtung 7 kann auch mehrere Außenmantel oder Schirme 8 aufweisen, wobei jeder der Außenmantel oder Schirme 8 mit einem separaten Hochfrequenz-Eingang 11 der Hochfrequenzeinheit 3 elektrisch verbunden ist oder wobei mehrere Außenmantel oder Schirme 8 mit einem einzigen Hochfrequenz-Eingang 11 elektrisch verbunden sind.

Im vorliegenden Ausführungsbeispiel ist der elektrische Leiter 5 Teil einer Mantelleitung. Es können aber auch beide Leiter 5, 6 Teil jeweils einer Mantelleitung sein. Der elektrische Leiter 5 ist von einem elektrisch isolierenden Isolationsmantel umgeben und die Koppeleinrichtung 7 umgibt diesen isolierten elektrischen Leiter 5 koaxial, wie Figur 1 weiter verdeutlicht. Der Isolationsmantel isoliert also den ersten elektrischen Leiter 5 elektrisch gegenüber der Koppeleinrichtung 7.

Der Außenmantel oder Schirm 8 der Koppeleinrichtung 7 weist vorliegend eine Länge etwa von einem Viertel oder von drei Viertel der Wellenlänge der durch die Hochfrequenzeinheit 3 empfangenen oder ausgestrahlten Hochfrequenzsignale auf.

In einer nicht dargestellten Variante ist es auch denkbar, dass die Koppeleinrichtung 7 mehrere Außenmantel oder Schirme 8 aufweist, wobei jeder der Außenmantel oder Schirme 8 mit einem separaten Hochfrequenz-Eingang 11 der Hochfrequenzeinheit 3 elektrisch verbunden ist oder wobei mehrere Außenmantel oder Schirme 8 mit einem einzigen Hochfrequenz-Eingang 11 elektrisch verbunden sind.

Die Darstellung gemäß Figur 1 zeigt weiter, dass der Außenmantel oder Schirm 8 der Koppeleinrichtung 7 als ein Röhrchen oder eine Hülse ausgebildet ist. Das Röhrchen oder die Hülse ist als Metallröhrchen, insbesondere aus nicht-ferromagnetischem Material, vorzugsweise im Wesentlichen aus Messing und/oder Kupfer und/oder Aluminium, ausgebildet. Der Schirm 8 kann auch als Schirmgeflecht ausgeführt sein. Das Röhrchen oder die Hülse kann alternativ aus einer Folie mit wenigstens einem elektrischen Anschluss zur elektrischen Kontaktierung der Folie an die Hochfrequenzeinheit 3 ausgebildet sein. Die Figur 3 zeigt eine solche Folie in nicht aufgerolltem Zustand. Hierbei ist zu erkennen, dass die Folie eine Metallisierung 12 auf der Oberseite und eine, vorzugsweise davon unterschiedliche, Metallisierung 13 auf der Unterseite der Folie auf aufweist.

Denkbar ist, dass je ein Anschluss pro Frequenz vorgesehen ist, also unterschiedliche Frequenzen angesprochenen werden können. Die Folie kann als Printfolie ausgebildet sein, welche entsprechend der gewünschten Anforderungen metallisiert ist. Anstelle des (metallischen) Röhrchens oder der Hülse kann demnach auch eine flexible Leiterplatte um den oder die Leiter gewickelt werden.

Die Folie zur Bildung der Schirmfläche des Außenmantels wird als Röhrchen oder als Hülse vorliegend um die erste elektrische Leitung 5 herumgelegt oder die elektrische Leitung 5 wird bei der Montage durch das Röhrchen hindurchgesteckt.

Das Röhrchen wird mit einem Hochfrequenz-Eingang 11 der Hochfrequenzeinheit 3 elektrisch leitend verbunden (vgl. Figur 1). Diese elektrische Verbindung zwischen dem Außenmantel oder Schirm 8 des Röhrchens und dem Hochfrequenz-Eingang 11 ist vorliegend als Folienverbindung, insbesondere als flexible Leiterplatte, ausgeführt.

Insbesondere kann die Verbindung (Folienverbindung) zwischen dem Schirm 8 und dem Hochfrequenz-Eingang 11 als flexible PCB-Folie oder FPC-Verbinder (flexible Leiterplatte) ausgeführt sein. Auf dieser Folie kann auf einfache Weise die Antennenanpassung, insbesondere eine Impedanz-Anpassung, vorgesehen sein.

Denkbar ist auch, dass sowohl das gerollte Röhrchen als auch die elektrische Verbindung zwischen Außenmantel oder Schirm 8 und Hochfrequenz-Eingang 11 als flexible Leiterplatte ausgebildet sind.

Da die flexible Leiterplatte auch elektronische Bauteile wie eine normale Leiterplatte tragen kann, kann die entsprechende Antennen-Anpassung direkt auf der flexiblen Leiterplatte hergestellt werden. Die Anpassung kann auch durch andere Maßnahmen am Layout innerhalb der flexiblen Leiterplatte hergestellt werden, beispielsweise durch die Wahl der Länge der Leiterbahnen.

Die flexible Leiterplatte (sowohl für das gerollte Röhrchen selbst als auch für die Verbindung zwischen Außenmantel oder Schirm 8 und Hochfrequenz-Eingang 11) kann auf beiden Seiten unterschiedlich große Kupfer-Flächen bzw. verschiedene Metallisierungen aufweisen (vgl. Figur 3). Diese beiden Seiten der Folie bzw. Leiterplatte werden dann zu Übertragung unterschiedlicher Frequenzen an unterschiedliche Hochfrequenz-Eingänge 11 angeschlossen.

Die Innenfläche und die Außenfläche der rohr- oder hülsenförmig geformten Folie zur Bildung der Schirmfläche des Außenmantels können demnach jeweils unterschiedlich metallisiert sein, wobei jede der Flächen mit einem Hochfrequenz-Eingang 11 elektrisch verbunden sein (vgl. Figur 3).

Die rohr- oder hülsenförmig geformte Folie kann zur Bildung der Schirmfläche des Außenmantels als flexible Leiterplatte ausgebildet sein.

In einem nicht dargestellten Ausführungsbeispiel weist die Vorrichtung 10 einen elektrischen Sperrkreis zur Ableitung unerwünschter Hochfrequenzsignale, insbesondere zur Sperrung elektronischer Komponenten der Antriebsvorrichtung 10 gegen unerwünschte Funksignale der Hochfrequenzeinheit 3 auf.

Zumindest die Hochfrequenzeinheit 3 und die Koppeleinrichtung 7 können in einem gemeinsamen Gehäuse angeordnet sein.

Ein elektrisches Gerät 1 kann eine oben beschriebene Vorrichtung 10 zur Steuerung des elektrischen Gerätes 1, insbesondere eines Rohrmotors einer Verdunkelungs-/Beschattungsvorrichtung, über Hochfrequenzsignale aufweisen. Die Antriebsvorrichtung 10 und das elektrische Gerät 1 können in einem gemeinsamen Gehäuse angeordnet sein, wie Figur 2b zeigt.

Alternativ kann die Vorrichtung 10 als Vorschaltgerät für das elektrische Gerät 1 ausgebildet sein, wie Figur 2a zeigt.

Die Vorrichtung 10 kann eine Steuereinheit 2 aufweisen, wie Figur 1 weiter zeigt.

### Bezugszeichenliste

- 1: elektrisches Gerät
- 2: Steuereinheit
- 3: Hochfrequenzeinheit
- 4: Stromversorgung
- 5: elektrischer Leiter
- 6: elektrischer Leiter
- 7: Koppeleinrichtung
- 8: Außenmantel oder Schirm
- 9: elektrisches Netzteil
- 10: Vorrichtung
- 11: Hochfrequenz-Eingang
- 12: Metallisierung Oberseite Folie
- 13: Metallisierung Unterseite Folie

## Patentansprüche

1. Vorrichtung (10) zur Steuerung eines elektrischen Gerätes (1) über Hochfrequenzsignale, umfassend
- eine Hochfrequenzeinheit (3) zum Senden und/oder zum Empfangen von Hochfrequenzsignalen mit einer oder mehreren Frequenzen zur Steuerung des elektrischen Gerätes (1),
- wenigstens einen ersten elektrischen Leiter (5) und einen zweiten elektrischen Leiter (6) für die Versorgung der Vorrichtung (10), und/oder des elektrischen Gerätes (1) und/oder der Hochfrequenzeinheit (3) mit elektrischer Energie, wobei wenigstens einer der Leiter (5, 6) als Antenne zum Senden und/oder Empfangen der Hochfrequenzsignale ausgebildet ist,
- eine mit der Hochfrequenzeinheit (3) verbundene Koppeleinrichtung (7),
**dadurch gekennzeichnet, dass**
die Koppeleinrichtung (7) als Koaxialleitung ausgebildet ist und einen Außenmantel oder Schirm (8) aufweist, der den ersten (5) oder zweiten elektrischen Leiter (6) koaxial umgibt, wobei der Außenmantel oder Schirm (8) mit der Hochfrequenzeinheit (3) elektrisch leitend verbunden ist.

2. Vorrichtung (10) nach Anspruch 1, **dadurch gekennzeichnet, dass** wenigstens einer der elektrischen Leiter (5, 6) Teil einer Mantelleitung ist, wobei dieser wenigstens eine elektrische Leiter (5, 6) von einem elektrisch isolierenden Isolationsmantel umgeben ist und die Koppeleinrichtung (7) den isolierten elektrischen Leiter (5, 6) koaxial umgibt.

3. Vorrichtung (10) nach Anspruch 2, **dadurch gekennzeichnet, dass** der Isolationsmantel den ersten (5) oder zweiten elektrischen Leiter (6) elektrisch gegenüber der Koppeleinrichtung (7) isoliert.

4. Vorrichtung (10) nach einem der Ansprüche 1 bis 3, **dadurch gekennzeichnet, dass** der Außenmantel oder Schirm (8) der Koppeleinrichtung (7) eine Länge etwa von einem Viertel oder von drei Viertel der Wellenlänge der durch die Hochfrequenzeinheit (3) empfangenen oder ausgestrahlten Hochfrequenzsignale aufweist.

5. Vorrichtung (10) nach einem der vorhergehenden Ansprüche, **dadurch gekennzeichnet, dass** die Koppeleinrichtung (7) mehrere Außenmantel oder Schirme (8) aufweist, wobei jeder der Außenmantel oder Schirme (8) mit einem separaten Hochfrequenz-Eingang (11) der Hochfrequenzeinheit (3) elektrisch verbunden ist oder wobei mehrere Außenmantel oder Schirme (8) mit einem einzigen Hochfrequenz-Eingang (11) elektrisch verbunden sind.

6. Vorrichtung (10) nach einem der vorhergehenden Ansprüche, **dadurch gekennzeichnet, dass** der Außenmantel oder Schirm (8) der Koppeleinrichtung (7) als wenigstens ein Röhrchen oder eine Hülse ausgebildet ist.

7. Vorrichtung (10) nach Anspruch 6, **dadurch gekennzeichnet, dass** das wenigstens eine Röhrchen oder die Hülse als Metallröhrchen, insbesondere aus nicht-ferromagnetischem Material, vorzugsweise im Wesentlichen aus Messing und/oder Kupfer und/oder Aluminium, ausgebildet ist.

8. Vorrichtung (10) nach Anspruch 6, **dadurch gekennzeichnet, dass** das wenigstens eine Röhrchen oder die Hülse aus einer Folie mit wenigstens einem elektrischen Anschluss zur elektrischen Kontaktierung der Folie an die Hochfrequenzeinheit (3) gebildet ist.

9. Vorrichtung (10) nach Anspruch 8, **dadurch gekennzeichnet, dass** die Folie zur Bildung der Schirmfläche des Außenmantels als Röhrchen oder als Hülse um die wenigstens erste (5) oder zweite (6) elektrische Leitung oder um mehrere elektrische Leitungen (5, 6) herumgelegt wird.

10. Vorrichtung (10) nach einem der vorherigen Ansprüche, **dadurch gekennzeichnet, dass** die elektrische Verbindung zwischen dem Außenmantel oder Schirm (8) und dem Hochfrequenz-Eingang (11) als Folienverbindung, insbesondere als flexible Leiterplatte, ausgeführt ist.

11. Vorrichtung (10) nach einem der Ansprüche 8 oder 9, **dadurch gekennzeichnet, dass** die Innenfläche und die Außenfläche der rohr- oder hülsenförmig geformten Folie zur Bildung der Schirmfläche des Außenmantels jeweils unterschiedlich metallisiert sind und wobei jede der Flächen mit einem Hochfrequenz-Eingang (11) elektrisch verbunden ist.

12. Vorrichtung (10) nach einem der vorhergehenden Ansprüche, **dadurch gekennzeichnet, dass** die rohr- oder hülsenförmig geformte Folie zur Bildung der Schirmfläche des Außenmantels als flexible Leiterplatte ausgebildet ist.

13. Vorrichtung (10) nach Anspruch 12, **dadurch gekennzeichnet, dass** die flexible Leiterplatte derart ausgebildet ist, dass durch ihre Bauart, insbesondere die Länge von Leiterbahnen auf der Leiterplatte, oder durch auf der Leiterplatte angeordnete Bauteile die Eigenschaften der Antenne, insbesondere deren Impedanz, beeinflusst werden.

14. Vorrichtung (10) nach einem der vorhergehenden Ansprüche, **dadurch gekennzeichnet, dass** die Vorrichtung (10) einen elektrischen Sperrkreis zur Ableitung unerwünschter Hochfrequenzsignale, insbesondere zur Sperrung elektronischer Komponenten der Antriebsvorrichtung (10) gegen unerwünschte Funksignale der Hochfrequenzeinheit (3) aufweist.

15. Vorrichtung (10) nach einem der vorhergehenden Ansprüche, **dadurch gekennzeichnet, dass** zumindest die Hochfrequenzeinheit (3) und die Koppeleinrichtung (7) in einem gemeinsamen Gehäuse angeordnet sind,

16. Elektrisches Gerät (1), **dadurch gekennzeichnet, dass** es eine Vorrichtung (10) zur Steuerung des elektrischen Gerätes (1), insbesondere eines Rohrmotors einer Verdunkelungs-/Beschattungsvorrichtung, über Hochfrequenzsignale nach einem der Ansprüche 1 bis 14 aufweist.

17. Elektrisches Gerät (1) nach Anspruch 16, **dadurch gekennzeichnet, dass** die Antriebsvorrichtung (10) und das elektrische Gerät (1) in einem gemeinsamen Gehäuse angeordnet sind.

18. Elektrisches Gerät (1) nach Anspruch 16, **dadurch gekennzeichnet, dass** die Vorrichtung (10) als Vorschaltgerät für das elektrische Gerät (1) ausgebildet ist.

19. Verdunkelungs-/Beschattungsvorrichtung mit einem auf ein Wickelrohr auf- und abwickelbaren Behang, wobei das Wickelrohr von einem elektrischen Gerät (1) nach einem der Ansprüche 16 bis 18 angetrieben wird.
